# EUROPÄISCHE PATENTANMELDUNG

(11) **EP 2 169 544 A1**
(43) Veröffentlichungstag der Anmeldung: **31.03.2010**
(21) Anmeldenummer: 08017093.9
(22) Anmeldetag: 29.09.2008
(51) Int. Cl.: G06F 9/445, G05B 19/418

(54) **Verfahren und Wartungsserver zur automatisierten Zuordnung und Anwendung produktbezogener Informationen zu einer Automatisierungskomponente**

(71) Anmelder: Siemens Aktiengesellschaft, 80333 München (DE)
(72) Erfinder: Dausend, Stefan, 91126 Schwabach (DE); Helmig, Dieter, 90475 Nürnberg (DE); Plattner, Christoph, 90431 Nürnberg (DE); Schindler, Josef, 90489 Nürnberg (DE)

(57) **Zusammenfassung**

Die Erfindung betrifft ein Verfahren und einen Wartungsserver zur automatisierten Zuordnung und Anwendung produktbezogener Informationen (PI) zu einer Automatisierungskomponente (AK1, AK2, AK3) in einer Automatisierungsanordnung und Anwendung der produktbezogenen Informationen (PI), wobei die Automatisierungskomponente (AK1, AK2, AK3) mit einer Versionsnummer ausgestattet ist, und wobei von einem Anbieter produktbezogene Informationen (PI) für Automatisierungskomponenten (AK1, AK2, AK3) mit dieser Versionsnummer bereit gestellt werden. Dabei wird in einem ersten Schritt von dem Anbieter eine strukturierte Datei mit zumindest einer Angabe über die produktbezogenen Informationen (PI) und mit einer Angabe über die Versionsnummer bereitgestellt, in einem zweiten Schritt wird die Versionsnummer einer oder mehrerer Automatisierungskomponenten (AK1, AK2, AK3) in der Automatisierungsanordnung ermittelt, in einem dritten Schritt werden die bereitgestellte und die ermittelten Versionsnummern verglichen und in einem vierten Schritt wird in Abhängigkeit von dem Vergleichsergebnis eine Anwendung der produktbezogenen Informationen (PI) gestartet.

## Beschreibung

Die Erfindung betrifft ein Verfahren zur automatisierten Zuordnung und Anwendung produktbezogener Informationen zu einer Automatisierungskomponente gemäß dem Oberbegriff des Patentanspruchs 1, und einen Wartungsserver für eine Automatisierungsanordnung gemäß dem Patentanspruch 14.

Industrielle Automatisierungsanordnungen umfassen in der Regel eine Vielzahl unterschiedlicher Automatisierungskomponenten, die Gegenstand einer regelmäßigen Wartung und Produktpflege sind bzw. sein sollen. Die Automatisierungskomponenten bestehen dabei aus Hardware und/oder Software, wobei für die Zwecke einer Instandhaltung und "Pflege" vom Hersteller der jeweiligen Automatisierungskomponente oder von dritter Seite Produktinformationen bereit gestellt werden können. Diese Produktinformationen umfassen beispielsweise Hinweise auf verfügbare Software-Updates, wobei die für das Update erforderliche neue Software oft den Produktinformationen beigefügt ist. Andere Produktinformationen können mögliche Produktfehler, Funktionserweiterungen und sog. "Abkündigungen", also Hinweise auf ein Ende des Supports durch den Hersteller, umfassen.

Oft sind die Produktinformationen nicht für alle Automatisierungskomponenten desselben Typs einschlägig, sondern nur für einen Teil derselben, beispielsweise abhängig von einem Herstell-Datum o.ä.. Um dabei eine Zuordnung zu erleichtern, ist es allgemein üblich, sowohl die Hardware als auch die Software ("Firmware") von technischen Anlagen und speziell von Automatisierungskomponenten mit Versionsnummern zu versehen, wobei die Angaben über Hersteller, Typ und Versionsnummer der jeweiligen Automatisierungskomponente, für die eine Produktinformation einschlägig ist, in der jeweiligen Produktinformation angegeben sind.

Somit stellt sich für einen Betreiber einer Automatisierungsanordnung regelmäßig die Aufgabe, die von den Herstellern "seiner" Automatisierungsanordnung und sonstigen Anbietern eingehenden produktbezogenen Informationen (Produktinformationen) dahingehend zu überprüfen, ob und, wenn ja, welche der Automatisierungskomponenten von diesen produktbezogenen Informationen betroffen sind. Nach dieser Identifizierung muss der Betreiber jeweils darüber entscheiden, ob und in welcher Weise die produktbezogenen Informationen verarbeitet und auf die jeweils zugeordneten Automatisierungskomponenten angewendet werden, also beispielsweise, ob und wann ein verfügbares "Software Update" installiert werden soll.

Dabei ist es für den Betreiber insbesondere bei komplexen Automatisierungsanordnungen häufig nur mit erheblichem Aufwand möglich, die Vielzahl der eingehenden produktbezogenen Informationen mit den von ihm derzeit genutzten Automatisierungskomponenten bzw. deren Versionsnummern abzugleichen. Dies ist insbesondere in den Fällen problematisch, in denen häufig während der Laufzeit von Maschinen und AutomatisierungsAnordnungen einzelne Komponenten ausgetauscht oder "hochgerüstet" werden, weil hierbei oft ein "nachziehen" der Anlagen-Dokumentation bzw. der Inventarverzeichnisse unterbleibt und diese dann nicht dem aktuellen Stand entsprechen. Für diesen "Abgleich" der Informationen ist es dann erforderlich, dass die Automatisierungsanordnung gezielt nach betroffenen Automatisierungskomponenten "durchsucht" werden muss. Um den damit verbundenen Aufwand zu minimieren, führen viele Betreiber diese "Suche" nach betroffenen Automatisierungskomponenten nur dann durch, wenn die produktbezogenen Informationen Mängel der Produktsicherheit betreffen oder eine ähnlich wichtige Ursache haben. Dadurch entsteht der Nachteil, dass nicht alle produktbezogenen Informationen optimal verarbeitet werden und somit viele Automatisierungskomponenten nicht den optimalen bzw. aktuellen Wartungs- oder Versionsstand aufweisen.

Es ist daher eine Aufgabe der vorliegenden Erfindung, den Aufwand für die Verarbeitung produktbezogener Informationen zu verringern.

Die Aufgabe wird durch ein Verfahren zur automatisierten Zuordnung und Anwendung produktbezogener Informationen gemäß dem Patentanspruch 1 und durch einen Wartungsserver gemäß dem Patentanspruch 12 gelöst.

Dabei wird ein Verfahren zur automatisierten Zuordnung produktbezogener Informationen zu einer Automatisierungskomponente in einer Automatisierungsanordnung und Anwendung der produktbezogenen Informationen vorgeschlagen, wobei die Automatisierungskomponente mit einer Versionsnummer ausgestattet ist, und wobei von einem Anbieter produktbezogene Informationen für Automatisierungskomponenten mit dieser Versionsnummer bereitgestellt werden. Dabei wird in einem ersten Schritt von dem Anbieter eine strukturierte Datei mit zumindest einer Angabe über die produktbezogenen Informationen und einer Angabe über die zumindest eine damit verknüpfte Versionsnummer bereit gestellt. In einem zweiten Schritt werden die Versionsnummer einer oder mehrerer Automatisierungskomponenten in der Automatisierungsanordnung ermittelt, wobei in einem dritten Schritt die bereitgestellte und die ermittelten Versionsnummer verglichen werden, und in einem vierten Schritt in Abhängigkeit von dem Vergleichergebnis eine Verarbeitung der produktbezogenen Informationen und Anwendungen auf die betroffene Automatisierungskomponente gestartet wird. Dabei ist die Versionsnummer allgemein eine Angabe, die zur Identifizierung und Unterscheidung von Automatisierungskomponenten geeignet ist, und somit nicht zwangsläufig eine Zahl, sondern meist eine Kombination aus Zahlen, Buchstaben und Zeichen. Vorteilhaft umfasst die "Versionsnummer" auch Angaben über den Hersteller einer Komponente oder einer Software bzw. Firmware.

Durch die Verwendung einer strukturierten Datei, beispielsweise anstelle eines Direktzugriffs zwischen Automatisierungskomponenten und Anbieter, kann die von den meisten Betreibern der Automatisierungsanordnungen geforderte vollständige Entkopplung zwischen Anbieter und Automatisierungsanordnung gewährleistet werden. Ein manueller Abgleich zwischen den produktbezogenen Informationen der Datei und den Versionsnummern der tatsächlich in der Automatisierungsanordnung verbauten Automatisierungskomponenten kann entfallen, weil die Datei aufgrund ihrer Struktur, beispielsweise als XML-Datei (XML = Extensible Markup Language), automatisiert ausgewertet werden kann. Ein weiterer Vorteil besteht darin, dass für die Entscheidung, ob eine produktbezogene Information für eine oder mehrere verbaute Automatisierungskomponenten einschlägig ist, nicht auf ein ggf. fehlerhaftes Inventarverzeichnis oder eine andere Dokumentation zurückgegriffen werden muss, sondern die tatsächlichen Versionsnummern der Automatisierungskomponenten ausgelesen und für den Vergleich herangezogen werden.

Die Aufgabe wird weiter durch einen Wartungsserver für eine Automatisierungsanordnung gelöst, wobei der Wartungsserver zur Ausführung des zweiten, dritten und vierten Schrittes des vorstehend beschriebenen Verfahrens ausgebildet ist. Durch den Einsatz eines solchen Wartungsservers kann die Verarbeitung und ggf. Anwendung der produktbezogenen Informationen automatisiert erfolgen, so dass der Aufwand einer manuellen Verarbeitung entfällt und dabei entstehende Fehler vermieden werden können.

Vorteilhafte Ausgestaltungen des erfindungsgemäßen Verfahrens sind in den abhängigen Patentansprüchen angegeben. Die dabei beschriebenen Merkmale und Vorteile gelten sinngemäß auch für den erfindungsgemäßen Wartungsserver.

Die Pflege der Software und der Firmware der Automatisierungskomponenten wird vereinfacht, indem die produktbezogenen Informationen auch Angaben über ein verfügbares Software-Update mit neuer Software für die zumindest eine Automatisierungskomponente umfassen. Dabei können die produktbezogenen Informationen entweder einen Hyperlink oder einen anderen Verweis zu einem Speicherort der neuen Software umfassen, oder aber die neue Software ist sogleich ein Teil der produktbezogenen Informationen, so dass diese dann direkt installiert und somit angewendet werden kann. In dem zweiten Schritt kann die Versionsnummer durch eine an die jeweilige Automatisierungskomponente versendete Abfragenachricht und/oder mittels eines Zugriffs auf ein Inventarverzeichnis (Dokumentation) der Automatisierungsanordnung ermittelt werden. Während im ersten Fall vorteilhaft stets die tatsächlich vorhandene Versionsnummer in Erfahrung gebracht werden kann, kann im zweiten Fall die Netzlast, die durch die einzelnen Abfragenachrichten und Antworten jeder Automatisierungskomponente entstehen würde, verringert werden. Dabei kann der zweite und der dritte Schritt vorteilhaft von einem der Automatisierungsanordnung zugeordneten Wartungsserver ausgeführt werden, so dass die Automatisierungskomponenten als solche von dieser Aufgabe entlastet sind. Ein direkter Zugriff auf die Automatisierungskomponenten kann entfallen, wenn zumindest einem Teil der Automatisierungskomponenten ein Automatisierungs-Controller zugeordnet ist, wobei in dem zweiten Schritt für den Abruf der Versionsnummer die Abfragemeldung von dem Wartungsserver zu dem Automatisierungs-Controller versendet und von diesem an die Automatisierungskomponente weitergeleitet wird. Alternativ kann die Abfragemeldung auch durch den Automatisierungs-Controller selbst beantwortet werden, was insbesondere in den Fällen vorteilhaft ist, in denen die Automatisierungskomponente nicht zur Verarbeitung einer solche Abfragemeldung eingerichtet ist oder von der Beantwortung solcher Abfragemeldungen entlastet werden soll. Man spricht dann auch davon, dass der Automatisierungs-Controller als "Proxy" für die ihm zugeordneten Komponenten und Einrichtungen wirkt.

Die Anwendung der produktbezogenen Information, insbesondere die Installation von Software-Updates, kann von einem Betreiber der Automatisierungsanordnung kontrolliert werden, wenn in dem vierten Schritt vor der automatischen Weiterverarbeitung der produktbezogenen Informationen an einer Benutzeroberfläche des Wartungsservers und/oder einer anderen Benutzeroberfläche der Automatisierungsanordnung als ein erster Verarbeitungsschritt eine Hinweismeldung über die zu verarbeitenden produktbezogenen Informationen ausgegeben wird, wobei die automatische Weiterverarbeitung nach einer Freigabe durch eine Bedienperson erfolgt. In solchen Fällen, in denen eine automatisierte Verarbeitung nicht oder nicht vollständig möglich ist, beispielsweise bei Hardware-bezogenen Änderungen, können somit auch Hinweise und Arbeitsanweisungen ausgegeben werden. Außerdem hat eine Bedienperson dadurch die Möglichkeit, einen späteren Zeitpunkt für die Anwendung der produktbezogenen Informationen festzulegen.

Eine besonders ökonomische Verarbeitung von produktbezogenen Informationen ergibt sich, wenn in der Automatisierungsanordnung einer Mehrzahl von Automatisierungskomponenten verschiedenen Typs verwendet wird und die strukturierte Datei produktbezogene Informationen für gleich mehrere Typen von Automatisierungskomponenten und/oder mehrere Typen von Software umfasst. Dabei wird die strukturierte Datei vorteilhaft von dem Wartungsserver ausgewertet, wobei innerhalb einer Wartungs-Domäne des Wartungsservers alle Automatisierungskomponenten ermittelt werden, die von einer produktbezogenen Information betroffen sind, und wobei für jede der ermittelten Automatisierungskomponenten der dritte und der vierte Schritt durchgeführt werden. Alternativ zu der Verarbeitung durch einen Wartungsserver kann die strukturierte Datei oder zumindest ein Teil daraus, der für die Identifizierung einer potentiell von einer Produktinformation betroffenen Automatisierungskomponente ausreicht (das ist meist die Versionsnummer), auch an die Automatisierungskomponente oder Automatisierungskomponenten selbst übermittelt werden; den Versand dieser Abfragemeldung(en) übernimmt vorteilhaft der Wartungsserver. Dabei wird durch die Automatisierungskomponenten selbst dann der zweite, der dritte und der vierte Verfahrensschritt initiiert bzw. durchgeführt, indem durch diese der Vergleich vorgenommen wird und beispielsweise im positiven Fall eine Antwortmeldung an den Wartungsserver zurück übermittelt wird; im Falle eines negativen Vergleichsergebnisses kann eine kurze Negativ-Quittierung gesendet werden. Dadurch kann sowohl das Netzwerk, als auch ein Wartungsserver entlastet werden, bzw. in den Fällen, in denen der Versand der Abfragemeldung und die Anwendung der Produktinformationen anderweitig organisiert wird, auf einen solchen Wartungsserver ganz verzichtet werden. Für den negativen Vergleichsfall kann die Übermittlung einer negativen Quittierungsmeldung vereinbart werden.

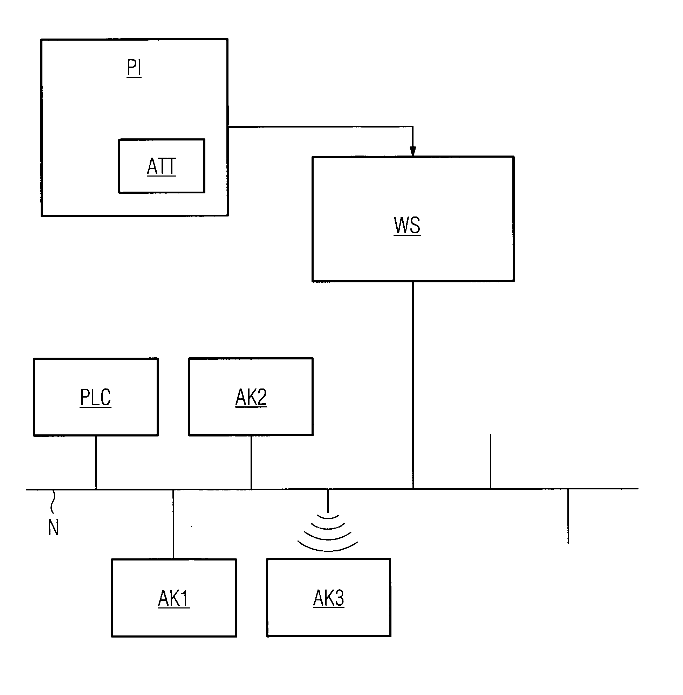

Ausführungsbeispiele des erfindungsgemäßen Verfahrens werden nachfolgend anhand der Zeichnung erläutert. Sie dienen gleichzeitig der Erläuterung eines erfindungsgemäßen Wartungsservers. Dabei ist es auch möglich, dass in einer Automatisierungsanordnung oder mittels ein- und desselben Wartungsservers die Verfahren aus verschiedenen Ausführungsbeispielen in Kombination miteinander durchgeführt werden.

Dabei zeigt die einzige Figur in schematischer Darstellung eine Anordnung aus einem Wartungsserver, einem Netzwerk und verschiedenen Automatisierungskomponenten.

In der Figur ist schematisch eine Automatisierungsanordnung dargestellt, bei der die Automatisierungskomponenten AK1, AK2, AK3 über ein Netzwerk N mit dem Automatisierungs-Controller PLC und dem Wartungsserver WS verbunden sind. Die Automatisierungskomponente AK3 ist dabei über eine drahtlose Verbindung (wireless LAN) mit dem Netzwerk N verbunden.

Im Folgenden wird anhand der Figur erläutert, wie Produktinformationen PI einer der Automatisierungskomponenten AK1, AK2, AK3 zugeordnet und auf diese angewendet werden, wobei in einem ersten Anwendungsbeispiel die Zuordnung durch den Wartungsserver WS erfolgt, und in einem zweiten Ausführungsbeispiel die Zuordnung "dezentral" durch die betroffene Automatisierungskomponenten AK1, AK2, AK3 selbst.

Im Folgenden wird angenommen, dass der Hersteller der Automatisierungskomponente AK1 eine neue Version der Software ("Firmware") für verschiedene seiner Produkte bereitstellt, unter anderem auch für die Automatisierungskomponente AK1. Der Hersteller erstellt für die Distribution der neuen Software-Versionen eine strukturierte Datei, hier im XML-Datenformat, in der für jedes betroffene Produkt die Bezeichnung des Produktes (Typenbezeichnung), ein Hersteller-Kürzel ("Vendor-ID"), eine Information darüber, dass ein Software-Update verfügbar ist, die Versionsnummer der neuen Software (bzw. eine identifizierende Bezeichnung für Komponenten, für die diese gedacht ist; sie kann die "Vendor-ID" auch umfassen), ein Hyperlink zu einem Speicherort für die neue Software und eine Bemerkung (Installationshinweis) jeweils verzeichnet sind. Diese strukturierte Datei wird an alle potentiell betroffenen Kunden versendet, beispielsweise per Datenträger oder, wie hier, per E-Mail. Diese Datei mit den Produktinformationen PI wird kundenseitig auf dem Wartungsserver WS gespeichert, was in der Figur mittels eines Pfeils visualisiert ist. In den Fällen, in denen der Wartungsserver WS mittelbar oder unmittelbar mit dem Internet verbunden ist, kann dabei diese Übertragung direkt per E-Mail von dem Hersteller zu diesem Wartungsserver WS oder per Abruf durch den Wartungsserver WS erfolgen. In vielen Fällen ist jedoch ein Datenaustausch zwischen der Automatisierungsanordnung und damit auch dem Wartungsserver WS und dem Internet aus Sicherheitsgründen nicht erwünscht und somit blockiert, so dass in diesen Fällen nach einer Sicherheitsüberprüfung der strukturierten Datei diese mittels eines Datenträgers auf den Wartungsserver WS übertragen wird.

Der Wartungsserver WS startet nun eine Verarbeitung der strukturierten Datei, wobei optional als erstes eine weitere Sicherheitsüberprüfung durchgeführt wird, indem beispielsweise eine digitale Signatur der strukturierten Datei überprüft wird, um zu verhindern, dass das eine missbräuchlich hergestellte strukturierte Datei verarbeitet wird. Die entsprechende Verarbeitungs-Routine des Wartungsservers WS identifiziert nun alle in der strukturierten Datei verzeichneten Geräte und Komponenten, insbesondere Automatisierungskomponenten Ak1, AK2, AK3, für die Produktinformationen vorliegen. Während das in einer alternativen Ausführungsform durch Zugriff auf eine Datei mit Inventar-Informationen erfolgen kann, wird im vorliegenden Ausführungsbeispiel eine Abfragemeldung an alle an dem Netzwerk N angeschlossenen Komponenten, nämlich den Automatisierungskomponenten AK1, AK2, AK3 und den Automatisierungs-Controller PLC, versendet. Dies wird im vorliegenden Ausführungsbeispiel mittels einer einzigen "Broadcast-Meldung" bewerkstelligt, so dass eine einzige Abfragemeldung hierbei ausreicht. Mittels der Abfragemeldung werden alle erreichbaren Komponenten dazu aufgefordert, einen sog. "I&M-Datensatz" an den Wartungsserver WS zu versenden. Die "I&M-Datensätze" (Information & Maintenance) umfassen einen elektronischen Steckbrief der aufgefundenen Komponenten, der unter anderem jeweils ein Kürzel für den Hersteller (Vendor-ID), den aktuellen Software-Stand (Versions-Nr.) und Statusangaben (z.B. bereit, Störung, Leerlauf etc.) umfassen. Jede dieser Antwortnachrichten wird von dem Wartungsserver WS ausgewertet, wobei im vorliegenden Ausführungsbeispiel die Automatisierungskomponente AK1 identifiziert wird, die von demselben Hersteller stammt, der auch in zumindest einem Eintrag der Produktinformation PI vermerkt ist, und wobei durch einen Vergleich der Versionsnummer festgestellt wird, dass die von der Automatisierungskomponente AK1 gemeldete Software-Version älter ist, als die mit der neuen Versionsnummer, die in den Produktinformationen PI verzeichnet ist.

Der Wartungsserver erstellt nun ein Protokoll über die Vergleichsergebnisse und generiert daraus eine Meldung, die an einer grafischen Benutzeroberfläche ausgegeben wird. Dabei wird ein Benutzer darüber informiert, dass für die Automatisierungskomponente AK1 ein Software-Update verfügbar ist, wobei unter anderem auch eine diesbezügliche Bemerkung aus den Produktinformationen PI ausgegeben wird. Eine solche Bemerkung könnte beispielsweise den Grund für das Software-Update wiedergeben, beispielsweise die Beseitigung eines Sicherheitsmangels. Die Bedienperson kann jetzt mittels einer Eingabe an der grafischen Benutzeroberfläche bestimmen, ob und wann das Software-Update der Automatisierungskomponente AK1 durchgeführt werden soll. Nach der "Freigabe" dieser Wartungsmaßnahme wird der Benutzer dazu aufgefordert, die dazu benötigte neue Version der Software bereitzustellen. In den Fällen, in denen die Produktinformation PI einen Verweis (Hyperlink) zu einem Speicherort enthalten, kann der Benutzer beispielsweise einen Zugriff auf diesen Speicherort freigeben, so dass die Software automatisch geladen werden kann. Alternativ kann die Software jedoch auch manuell von einer Bedienperson auf den Wartungsserver übertragen werden. In einer dritten Ausführungsform ist die Software bereits als Datei-Anhang ATT ("Attachement") den Produktinformationen beigefügt, so dass die Software bereits auf dem Wartungsserver WS vorliegt. Mit Vorliegen der erforderlichen Software kann diese nun von dem Wartungsserver WS an die betroffene Automatisierungskomponente AK1 übertragen und dort in Betrieb ("angewendet") genommen werden.

Anstelle des hier beschriebenen Software-Updates können auch andere Wartungsmaßnahmen mittels der Produktinformation PI veranlasst werden. Beispielsweise können damit dem Bedienpersonal gezielt Hinweise und Anweisungen für den Betrieb von verbauten Automatisierungskomponenten begeben werden. In den Fällen, in denen Automatisierungskomponenten AK1, AK2, AK3 nicht die Fähigkeit haben, auf Abfragemeldungen selbst zu reagieren, kann stellvertretend ein Automatisierungs-Controller PLC für diese zugeordnete Automatisierungskomponenten AK1, AK2, AK3 diese Aufgabe übernehmen.

Alternativ oder zusätzlich zu der vorstehend beschriebenen Durchführung des Vergleichs durch den Wartungsserver WS können auch mit der Abfragemeldung die Produktbezeichnungen oder Versionsnummern derjenigen oder denjenigen Automatisierungskomponenten AK1, AK2, AK3 übermittelt werden, welche von den Produktinformationen PI möglicherweise betroffen sind. Diese Abfragemeldungen, die bei dieser Ausführungsform auch "Suchmeldungen" genannt werden, können dann an einzelne, mehrere oder alle potentiell betroffenen Komponenten der Automatisierungsanordnung versendet werden, wobei die empfangenden Komponenten AK1, AK2, AK3, PLC - letztgenannter Automatisierungs-Controller PLC stellvertretend für Automatisierungskomponenten AK1, AK2, AK3 ohne diesbezügliche eigene Fähigkeiten - feststellen, ob sie von einer Produktinformationen PI betroffen sind, und im Falle eines positiven Vergleichsergebnisses ihre "I&M-Informationen" an den Wartungsserver WS versenden. Die Suchmeldung(en) können, wie gesagt, ressourcen-sparend auch als Broadcast-Meldung oder Multicast-Meldung versendet werden. Diese Ausführungsvariante hat zum Vorteil, dass nicht von allen erreichten Komponenten die gesamten "I&M-Informationen" über das Netzwerk N übertragen werden müssen. Durch das vorstehend beschriebene Verfahren in seinen verschiedenen Ausprägungen können unter anderem die folgenden Vorteile realisiert werden:

Einem Betreiber einer Automatisierungsanordnung können über ein Leit- oder Wartungssystem (hier: Wartungsserver WS) gezielt Vorschläge und Empfehlungen (Austausch, Hochrüstung, Betriebsweise etc.) unterbreitet werden. Durch die Verwendung einer strukturierten Datei anstelle eines Direktzugriffs kann die von vielen Betreibern geforderte vollständige Entkopplung der Automatisierungsanordnung von öffentlichen Datennetzwerken ("Internet") gewährleistet werden. Weiter können bei Service- oder Wartungsarbeiten getauschte bzw. "hochgerüstete" mit bereits gespeicherten strukturierten Dateien mit Produktinformationen verglichen werden und somit sofort nach der Inbetriebnahme auf den aktuellen "Stand" gebracht werden, wobei anhand der Bemerkungen in den gespeicherten strukturierten Dateien auch vor Inkompatibilitäten oder potentiellen Fehlern direkt gewarnt werden kann. Auch Fehlerpotentiale im Zusammenspiel verschiedener Komponenten können überwacht werden, indem entsprechende Datenfelder in den Produktinformationen ausgewertet werden. Weiter können durch das vorstehende Verfahren Lagerbestände in den Soll-Ist-Abgleich mit eingebunden werden, sofern die notwendigen Informationen über diese gelagerten Komponenten in maschinenlesbarer Form (beispielsweise Barcode oder RFID-Etikett) bereitgestellt werden. Die Ergebnisse des Soll-Ist-Abgleichs können auf Wunsch des Betreibers nicht nur "vor Ort" verwendet werden, sondern auch vom technischen Support des Lieferanten ausgewertet werden.

## Patentansprüche

1. Verfahren zur automatisierten Zuordnung und Anwendung produktbezogener Informationen (PI) zu einer Automatisierungskomponente (AK1, AK2, AK3) in einer industriellen Automatisierungsanordnung und Anwendung der produktbezogenen Informationen (PI),
wobei die Automatisierungskomponente (AK1, AK2, AK3) mit einer Versionsnummer ausgestattet ist, und
wobei von einem Anbieter produktbezogene Informationen (PI) für Automatisierungskomponenten (AK1, AK2, AK3) mit dieser Versionsnummer bereit gestellt werden,
**dadurch gekennzeichnet, dass**
- in einem ersten Schritt von dem Anbieter eine strukturierte Datei mit zumindest einer Angabe über die produktbezogenen Informationen (PI) mit einer Angabe über die Versionsnummer der von den produktbezogenen Informationen (PI) betroffenen Automatisierungskomponenten (AK1, AK2, AK3) bereitgestellt wird,
- in einem zweiten Schritt die Versionsnummer einer oder mehrerer Automatisierungskomponenten (AK1, AK2, AK3) in der Automatisierungsanordnung ermittelt werden,
- in einem dritten Schritt die bereitgestellte und die ermittelten Versionsnummern verglichen werden, und
- in einem vierten Schritt in Abhängigkeit von dem Vergleichsergebnis eine Anwendung der produktbezogenen Informationen (PI) gestartet wird.

2. Verfahren nach Patentanspruch 1,
**dadurch gekennzeichnet, dass**
die produktbezogenen Informationen (PI) Angaben über ein verfügbares Software-Update mit neuer Software für die zumindest eine Automatisierungskomponente (AK1, AK2, AK3) umfassen.

3. Verfahren nach Patentanspruch 2,
**dadurch gekennzeichnet, dass**
die strukturierte Datei einen Hyperlink zu einem Speicherort der neuen Software oder die neue Software selbst umfasst.

4. Verfahren nach einem der vorhergehenden Patentansprüche,
**dadurch gekennzeichnet, dass**
in dem zweiten Schritt die Versionsnummer durch eine an die Automatisierungskomponente (AK1, AK2, AK3) versendete Abfragenachricht oder mittels eines Zugriffs auf ein Inventarverzeichnis der Automatisierungsanordnung ermittelt wird.

5. Verfahren nach einem der vorhergehenden Patentansprüche,
**dadurch gekennzeichnet, dass**
der zweite Schritt von einem der Automatisierungsanordnung zugeordneten Wartungsserver (WS) ausgeführt wird.

6. Verfahren nach Patentanspruch 5,
**dadurch gekennzeichnet, dass**
die Automatisierungskomponente (AK1, AK2, AK3) einem Automatisierungs-Controller (PLC) zugeordnet ist, wobei in dem zweiten Schritt für den Abruf der Versionsnummer die Abfragemeldung von dem Wartungsserver (WS) zu dem Automatisierungs-Controller (PLC) versendet und von diesem an die Automatisierungskomponente (AK1, AK2, AK3) weitergeleitet wird.

7. Verfahren nach Patentanspruch 5 oder 6,
**dadurch gekennzeichnet, dass**
eine Antwortmeldung mit der Angabe über die Versionsnummer von der Automatisierungskomponente (AK1, AK2, AK3) zu dem Wartungsserver (WS) übermittelt wird, und
dass der dritte Schritt von dem Wartungsserver (WS) ausgeführt wird.

8. Verfahren nach einem der vorhergehenden Patentansprüche,
**dadurch gekennzeichnet, dass**
in dem vierten Schritt vor der automatischen Anwendung der produktbezogenen Informationen (PI) an einer Benutzeroberfläche des Wartungsservers (WS) und/oder einer anderen Benutzeroberfläche der Automatisierungsanordnung eine Hinweismeldung über die zu verarbeitenden produktbezogenen Informationen (PI) ausgegeben wird, wobei die automatische Anwendung nach einer Freigabe durch eine Bedienperson erfolgt.

9. Verfahren nach einem der vorherigen Patentansprüche,
**dadurch gekennzeichnet, dass**
in der Automatisierungsanordnung eine Mehrzahl von Automatisierungskomponenten (AK1, AK2, AK3) verschiedenen Typs verwendet wird, wobei die strukturierte Datei produktbezogene Informationen (PI) für mehrere Automatisierungskomponenten (AK1, AK2, AK3) und/oder mehrere Typen von Software umfasst.

10. Verfahren nach Patentanspruch 9,
sofern rückbezogen auf Patentanspruch 5,
**dadurch gekennzeichnet, dass**
die strukturierte Datei von dem Wartungsserver (WS) ausgewertet wird, wobei
innerhalb einer Wartungs-Domäne des Wartungsservers (WS) alle Automatisierungskomponenten (AK1, AK2, AK3) ermittelt werden, die von einer produktbezogenen Information (PI) betroffen sind, und
wobei für jede der ermittelten Automatisierungskomponenten (AK1, AK2, AK3) der dritte und der vierte Schritt durchgeführt werden.

11. Verfahren nach einem der Patentansprüche 1 bis 3,
**dadurch gekennzeichnet, dass**
zumindest die in der strukturierten Datei bereitgestellte Versionsnummer durch einen Wartungsserver (WS) mittels einer Suchnachricht an die Automatisierungskomponente (AK1, AK2, AK3) selbst übermittelt wird, wobei durch diese der zweite und der dritte Verfahrensschritt durchgeführt wird.

12. Verfahren nach Patentanspruch 11,
**dadurch gekennzeichnet, dass**
durch die Automatisierungskomponente (AK1, AK2, AK3) in den Fällen, in denen ein Vergleich der Versionsnummern eine Anwendung der produktbezogenen Informationen (PI) bedingt, eine Antwortmeldung mit der Angabe über die Versionsnummer von der Automatisierungskomponente (AK1, AK2, AK3) zu dem Wartungsserver (WS) übermittelt wird.

13. Verfahren nach einem der Patentansprüche 11 oder 12,
**dadurch gekennzeichnet,**
**dass** als die Suchnachricht eine an eine Mehrzahl von Automatisierungskomponenten (AK1, AK2, AK3) gerichtete Multicast-oder Broadcast-Nachricht verwendet wird.

14. Wartungsserver (WS) für eine Automatisierungsanordnung,
**dadurch gekennzeichnet, dass**
der Wartungsserver (WS) zur Ausführung des zweiten, dritten und vierten Schrittes aus einem der Verfahren gemäß Patentansprüche 1 bis 11 ausgebildet ist.
